# EUROPÄISCHE PATENTSCHRIFT

(11) **EP 2 498 106 B1**
(45) Veröffentlichungstag und Bekanntmachung des Hinweises auf die Patenterteilung: **16.12.2020**
(21) Anmeldenummer: 12158340.5
(22) Anmeldetag: 07.03.2012
(51) Int. Cl.: G02B 5/04, G02B 17/04, G02B 23/10

(54) **Optisches Beobachtungsgerät mit wenigstens einem visuellen Beobachtungsstrahlengang**
Optical observation device with at least one visual observation beam
Appareil d'observation optique doté d'au moins une trajectoire de faisceau d'observation visuelle

(30) Priorität: 08.03.2011 DE 102011005229
(43) Veröffentlichungstag der Anmeldung: 12.09.2012
(73) Patentinhaber: Carl Zeiss AG, 73447 Oberkochen (DE)
(72) Erfinder: Bach, Christian, 35418 Buseck (DE)
(74) Vertreter: Freischem & Partner Patentanwälte mbB

(56) Entgegenhaltungen:
- US-A- 5 530 565
- US-A- 6 122 080
- US-A1- 2002 021 498
- US-A1- 2010 208 341

## Beschreibung

Die Erfindung betrifft ein optisches Beobachtungsgerät mit wenigstens einem visuellen Beobachtungsstrahlengang gemäß dem Oberbegriff von Anspruch 1.

In optischen Beobachtungsgeräten wie Zieloptiken, Fernrohren, Mikroskopen oder dergleichen sollten dem Benutzer Informationen bzw. Daten, flexible Zielmarken usw. angezeigt oder eingeblendet werden können. Aus der Praxis sind dafür unterschiedliche Einblendungs- bzw. Einspiegelungskonzepte bekannt. Solche optischen Einspiegelungsverfahren sollten im Wesentlichen folgende Randbedingungen erfüllen. Der Transmissionsgrad für das Hauptlicht bzw. das Beobachtungslicht des optischen Beobachtungsgeräts sollte möglichst hoch (beispielsweise größer 95 %) sein. Darüber hinaus sollte der benötigte Bauraum für ein entsprechendes Einspiegelungsmodul an den Bauraum des optischen Beobachtungsgeräts angepasst und/oder gering sein.

Bei bisherigen Lösungen wird zumeist mittels eines Strahlteilers, der regelmäßig in ein Prismenumkehrsystem integriert ist, Licht von einer Anzeigeeinrichtung zur Anzeige einer Entfernung oder zur Einspiegelung einer Zielmarke in den Beobachtungsstrahlengang eingekoppelt. Dadurch wird die Transmission des gesamten Beobachtungsstrahlengangs spürbar reduziert und darüber hinaus kann es zu Farbverfälschungen kommen, wenn das Teilerverhältnis des Strahlteilers von der Wellenlänge des Lichts abhängig ist. Derartige bekannte Lösungen weisen oftmals einen größeren Platzbedarf als das eigentlich zugrunde liegende Prismensystem auf.

Die DE 195 25 520 C2 beschreibt die Einkopplung von Bildern in Strahlengänge von Mikroskopen mittels diffraktiver optischer Elemente, insbesondere Reflexions- und Transmissionsgittern. Die dort beschriebenen diffraktiven optischen Elemente besitzen keine abbildende Wirkung. Die abbildende Wirkung wird durch weitere optische Elemente erzielt.

Die DE 692 22 261 T2 betrifft Sichtvorrichtungen und insbesondere Vorrichtungen, die es ermöglichen, einem von beispielsweise dem Abbild einer natürlichen Landschaft gebildeten Bild ein zweites Bild zu überlagern, das beispielsweise aus symbolischen Elementen besteht, etwa geographische oder andere Symbole.

In der DE 10 2008 003 414 A1 ist ein binokulares Fernglas mit zwei Tubussen angegeben, in denen jeweils ein Abbe-König-Prismensystem zur Bildumkehr eines jeweiligen visuellen Beobachtungsstrahlengangs angeordnet ist, wobei das jeweilige Abbe-König-Prismensystem aus einem Gleichschenkelprisma und einem mit diesem benachbarten Dachkantprisma besteht.

Zum weiteren Stand der Technik wird auf die WO 00/16150, die US 5,355,224, US 6,122,080 und die US 6,914,726 B2 verwiesen.

Ausgehend davon liegt der vorliegenden Erfindung die Aufgabe zugrunde, ein optisches Beobachtungsgerät der eingangs erwähnten Art zu verbessern, wobei insbesondere ein geringer Bauraumbedarf des Einspiegelungsmoduls sowie eine hohe Transmission des Beobachtungsstrahlengangs erreicht werden soll.

Diese Aufgabe wird erfindungsgemäß durch ein optisches Beobachtungsgerät mit den in Anspruch 1 genannten Merkmalen gelöst.

Dadurch, dass das Abbe-König-Prismensystem, das Porroprismensystem oder das Schmidt-Pechan-Prismensystem mit dem wenigstens einen holographischen optischen Element der wenigstens einen Einrichtung zur Bildüberlagerung versehen ist, wird ein Strahlteiler und eine gegebenenfalls notwendige Abbildungsoptik in vorteilhafter Weise in einem Hologramm kombiniert, welches an geeigneter Stelle des Prismensystems eingebracht ist. Das Hologramm sorgt dabei für eine Einkopplung einer insbesondere monochromatischen Anzeige und optional zusätzlich für die Abbildung des Bildes der Anzeige in den Beobachtungsstrahlengang. Dadurch ist der notwendige Bauraum wesentlich geringer und die Montage wird vereinfacht. Durch die schmale Bandbreite der Einkopplung, insbesondere in einem Bereich von kleiner 100 nm, insbesondere kleiner 50 nm, vorzugsweise kleiner 20 nm wird die Transmission der restlichen Wellenlängen im Beobachtungsstrahlengang nur wenig gestört und die Gesamttransmission des visuellen Beobachtungsstrahlengangs deutlich höher als bei den bekannten Lösungen.

Das holographische optische Element kann eine Umlenkung des zu überlagernden Lichts des Bildes der Anzeigeeinrichtung in den wenigstens einen visuellen Beobachtungsstrahlengang bewirken.

Vorteilhaft ist es, wenn das holographische optische Element zusätzlich eine Abbildung, eine Kollimation und/oder eine Wellenlängenselektion des zu überlagernden Lichts der Anzeigeeinrichtung bewirkt.

Durch die Integration bzw. Kombination der unterschiedlichen optischen Elemente mit ihren Wirkungen in einem Hologramm wird der notwendige Bauraum geringer und die Montage wesentlich vereinfacht. Als Grundlage für das Hologramm dient eine Optik zumindest aus einem ersten Prisma, einem optionalen Kollimator, der die Anzeige in eine Bildebene abbildet und einem optionalen weiteren Prisma, das den Einbauwinkel der Anzeige bestimmen kann. Das erste Prisma sollte einen solchen Winkel aufweisen, dass, wäre es auf der Fläche des Umkehrprismensystem verkittet, Licht aus der Anzeige in das Prismensystem einfallen kann. Bei Bedarf könnten selbstverständlich noch weitere optische Elemente, zum Beispiel zur Vergrößerung oder Verkleinerung der Abbildung, integriert werden.

Das holographische optische Element ist transmittierend, insbesondere als Transmissionsbeugungsgitter ausgeführt.

Vorteilhaft ist es, wenn das holographische optische Element als holographische Schicht auf der Lichteintrittsfläche des Abbe-König-Prismensystems, des Porroprismensystems oder des Schmidt-Pechan-Prismensystems aufgebracht ist.

Durch diese Maßnahmen kann der benötigte Bauraum noch weiter verringert werden. Die holographische Schicht kann, insbesondere computergeneriert durch direkte Belichtung einer fotoempfindlichen Schicht, beispielsweise Silbersalz, direkt durch Lasergravur auf der Prismenfläche oder als Kunststoff Presshologramm aufgebracht werden. Die holographische Schicht kann auch in einer anderen allgemein bekannten Technik zur Holographiefertigung hergestellt werden.

Dabei kann eine Fläche eines Dachkantprismas oder eine Fläche eines Gleichschenkelprismas des Abbe-König-Prismensystems oder eine Fläche eines Dachkantprismas oder eine Fläche eines weiteren Prismas des Schmidt-Pechan-Prismensystems mit der holographischen Schicht versehen sein. Erfindungsgemäß ist vorgesehen, dass die Fläche die Lichteintrittsfläche des Dachkantprismas oder des Gleichschenkelprismas des Abbe-König-Prismensystems oder des Dachkantprismas oder des weiteren Prismas des Schmidt-Pechan-Prismensystems für das Beobachtungslicht ist.

Ebenso kann eine Fläche eines ersten Prismas oder eine Fläche eines zweiten Prismas des Porroprismensystems mit der holographischen Schicht versehen sein. Die Fläche ist die Lichteintrittsfläche des ersten Prismas oder des zweiten Prismas des Porroprismensystems für das Beobachtungslicht.

Abbe-Köng-Prismensysteme, Porroprismensysteme und Schmidt-Pechan-Prismensysteme bestehen üblicherweise aus jeweils genau zwei Prismen. Es besteht jedoch die Möglichkeit, weitere Prismen zu ergänzen.

Das optische Beobachtungsgerät kann beispielsweise als binokulares Fernglas, Fernrohr, Zieloptik oder Mikroskop ausgebildet sein.

Vorteilhafte Ausgestaltungen und Weiterbildungen der Erfindung ergeben sich aus den Unteransprüchen. Nachfolgend sind anhand der Zeichnung prinzipmäßig Ausführungsbeispiele der Erfindung angegeben.

Es zeigen:
Figur 1 eine schematische Darstellung eines optischen Beobachtungsgeräts;
Figur 2 eine schematische Darstellung eines optischen Beobachtungsgeräts;
Figur 3 eine schematische Darstellung eines optischen Beobachtungsgeräts;
Figur 4 eine schematische Darstellung eines optischen Beobachtungsgeräts;
Figur 5 eine schematische Darstellung einer Ausführungsform eines erfindungsgemäßen optischen Beobachtungsgeräts;
Figur 6 eine schematische Darstellung einer zweiten Ausführungsform eines erfindungsgemäßen optischen Beobachtungsgeräts;
Figur 7 eine schematische Darstellung einer dritten Ausführungsform eines erfindungsgemäßen optischen Beobachtungsgeräts;
Figur 8 eine schematische Darstellung einer vierten Ausführungsform eines erfindungsgemäßen optischen Beobachtungsgeräts;
Figur 9 eine schematische Darstellung eines optischen Beobachtungsgeräts;
Figur 10 eine schematische Darstellung eines optischen Beobachtungsgeräts;
Figur 11 eine schematische Darstellung eines optischen Beobachtungsgeräts;
Figur 12 eine schematische Darstellung einer fünften Ausführungsform eines erfindungsgemäßen optischen Beobachtungsgeräts;
Figur 13 eine schematische Darstellung einer sechsten Ausführungsform eines erfindungsgemäßen optischen Beobachtungsgeräts; und
Figur 14 eine vereinfachte schematische Darstellung eines Herstellungsverfahrens für ein holographisches optisches Element zum Einsatz in einem erfindungsgemäßen optischen Beobachtungsgerät.

Die Erfindung wird nachfolgend anhand eines Fernrohrs als optisches Beobachtungsgerät verdeutlicht. Sie kann jedoch auch mit den entsprechenden Änderungen bei beliebigen anderen optischen Beobachtungsgeräten zum Einsatz kommen.

Nachfolgend sind funktionsgleiche Elemente in den unterschiedlichen Ausführungsformen des erfindungsgemäßen optischen Beobachtungsgeräts mit denselben Bezugszeichen versehen.

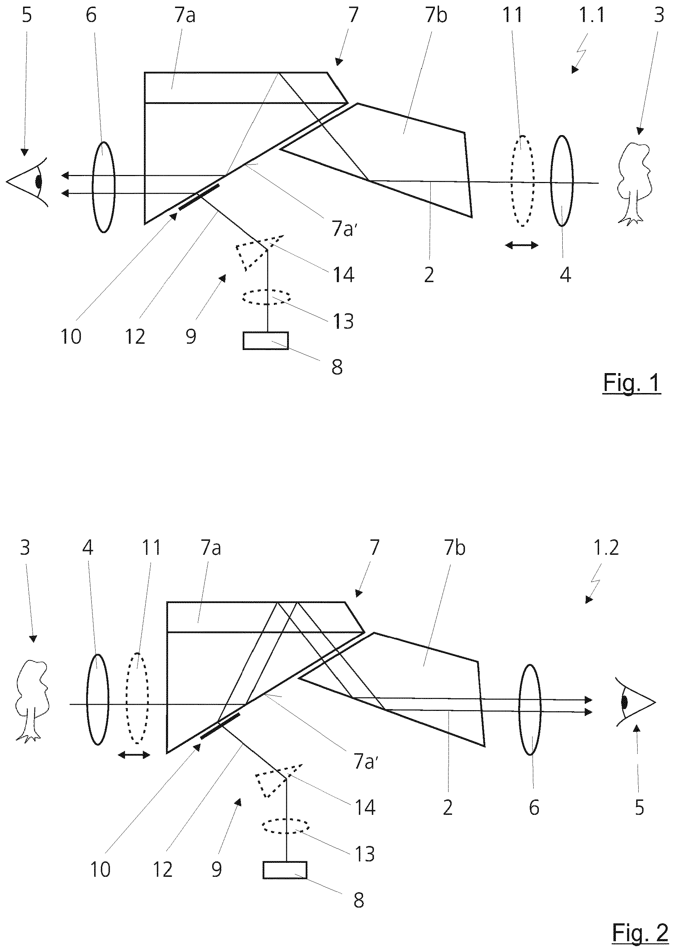

In Figur 1 ist ein optisches Beobachtungsgerät 1.1 mit einem visuellen Beobachtungsstrahlengang 2 dargestellt, welches ein in einer Betriebsstellung einem zu beobachtenden Zielobjekt 3 zuzuwendendes, das Zielobjekt 3 abbildendes Objektiv 4 und ein einem Auge 5 eines Beobachters zuzuwendendes Okular 6 aufweist. In dem visuellen Beobachtungsstrahlengang 2 ist zwischen dem Objektiv 4 und dem Okular 6 ein Abbe-König-Prismensystem 7 zur Bildumkehr des visuellen Beobachtungsstrahlengangs 2 angeordnet. Das Abbe-König-Prismensystem 7 weist ein Dachkantprisma 7a und ein Gleichschenkelprisma 7b auf. Hinsichtlich weiterer Einzelheiten des Abbe-König-Prismensystems 7 wird auf die eingangs angeführte DE 10 2008 003 414 A1 verwiesen, in der ebenfalls ein binokulares Fernglas mit einem Abbe-König-Prismensystem offenbart ist. Das Dachkantprisma 7a ist im visuellen Beobachtungsstrahlengang 2 insbesondere aus Platzgründen häufig in Richtung des Okulars 6 angeordnet. Zudem befindet sich das Dachkantprisma 7a dann näher am Auge 5 des Beobachters, sodass - sollte das Dachkantprisma 7a fehlerhaft sein - die entstehenden optischen Fehler vom Auge 5 nicht oder nicht so stark wahrgenommen werden.

Des Weiteren ist eine Anzeigeeinrichtung 8 vorgesehen, um dem Beobachter 5 ein zusätzliches Bild in dem visuellen Strahlengang anzuzeigen, sowie eine Einrichtung 9 zur Bildüberlagerung, welche ein, insbesondere diffraktives holographisches optisches Element 10 aufweist, und welche das Bild der Anzeigeeinrichtung 8 mit dem Bild des zu beobachtenden Zielobjekts 3 in einer Zwischenbildebene des visuellen Beobachtungsstrahlengangs 2 mittels des holographischen optischen Elements 10 überlagert. Wie weiter aus Figur 1 ersichtlich ist das Abbe-König-Prismensystem 7 mit dem holographischen optischen Element 10 der Einrichtung 9 zur Bildüberlagerung versehen.

Optional kann das optische Beobachtungsgerät 1 eine gestrichelt angedeutete bewegliche Fokuseinheit 11 aufweisen.

Das holographische optische Element 10 bewirkt eine Umlenkung des zu überlagernden Lichts 12 des Bildes der Anzeigeeinrichtung 8 in den visuellen Beobachtungsstrahlengang 2. Die Einrichtung 9 kann optional eine gestrichelt angedeutete Abbildungsoptik oder Abbildungslinse 13, welche auch als Kollimator dienen kann und das Bild der Anzeigeeinrichtung 8 in eine vorgegebene Bildebene projiziert und ein optionales weiteres Prisma 14 entsprechend einer erforderlichen Bildumlenkung zur Wahl der Montageposition der Anzeigeeinrichtung 8, aufweisen.

Alternativ kann das holographische optische Element 10 wie im vorliegenden Beispiel zusätzlich eine Abbildung, eine Kollimation und eine Wellenlängenselektion des zu überlagernden Lichts 12 der Anzeigeeinrichtung 8 bewirken.

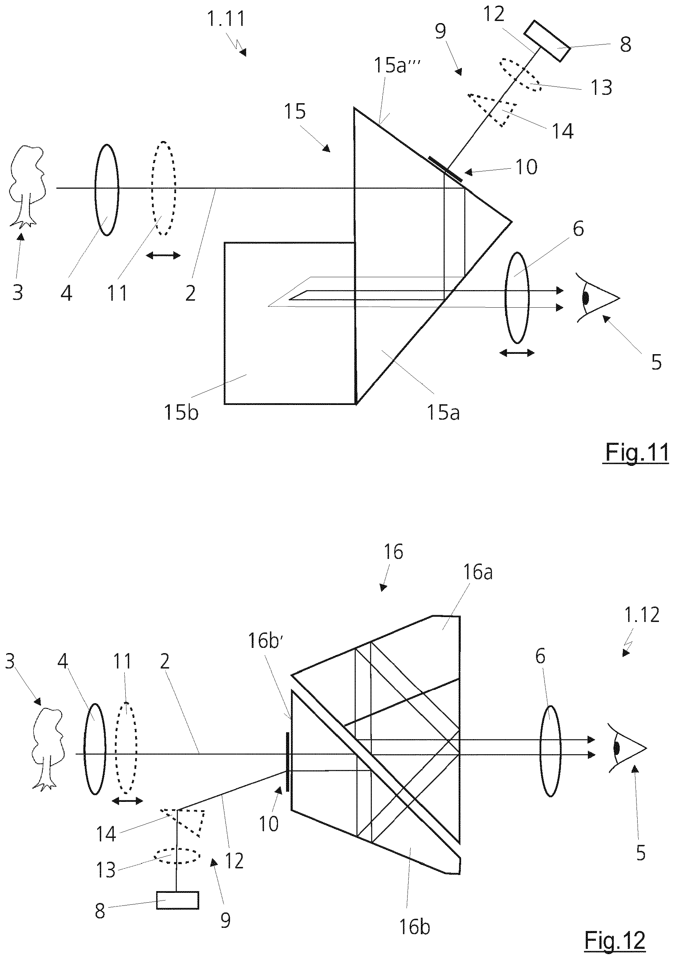

Als Grundlage für das holographische optische Element 10 oder Hologramm dient somit eine Optik 24 bestehend aus einem Prisma 24a (siehe Figur 12), einer optionalen Abbildungslinse bzw. Kollimatorlinse 13, 24b, welche die Anzeigeeinrichtung 8 in eine Zwischenbildebene abbildet und einem optionalen weiteren Prisma 14, 24c, das den Einbauwinkel der Anzeigeeinrichtung 8 berücksichtigt. Das Prisma 24a sollte einen derartigen Winkel aufweisen, dass Licht aus der Anzeigeeinrichtung 8 in das Abbe-König-Prismensystem 7 einfallen kann.

Die Anzeigeeinrichtung 8 kann beliebig, vorzugsweise monochromatisch ausgeführt sein. Z. B. kommen LED-Mehrsegmentanzeigen (für Zahlen und Symbole), LED-Matrixanzeigen (für beliebige Grafiken), mittels Laser oder LED-hinterleuchtete LCD-Anzeigen oder auch einzelne Punkte, die mittels LED oder Laser beleuchtet werden (z. B. zur Darstellung von Zielmarken) in Betracht.

Das Bild der Anzeigeeinrichtung 8 erscheint dem beobachteten Bild überlagert und kann dementsprechend vom Benutzer durch das Okular 6 abgelesen werden.

Das holographische optische Element 10 ist transmittierend, vorzugsweise als Transmissionsbeugungsgitter ausgeführt. Das holographische optische Element ist als holographische Schicht 10 direkt auf eine Fläche 7a' des Dachkantprismas 7a des Abbe-König-Prismensystems 7 aufgebracht (vereinfacht dargestellt). Die Zwischenbildebene zur Bildüberlagerung kann somit vereinfacht in der Fläche 7a' des Dachkantprismas 7a bzw. in den entsprechenden Flächen 7b', 7a", 7b", 15a', 15a", 15a''' der nachfolgend beschriebenen weiteren Ausführungsformen des erfindungsgemäßen optischen Beobachtungsgeräts 1.1 bis 1.11 gesehen werden.

In Figur 2 ist ein zweites optisches Beobachtungsgerät 1.2 dargestellt. Dabei ist das Abbe-König-Prismensystem 7 in dem optischen Beobachtungsgerät 1.2. umgedreht angeordnet, d.h., dass das Dachkantprisma 7a nicht dem Auge 5 des Beobachters, sondern dem Objektiv 4 bzw. dem Zielobjekt 3 zugewandt ist.

Die holographische Schicht 10 kann durch direkte Belichtung einer fotoempfindlichen Schicht, wie beispielsweise Silbersalz, direkt auf die Fläche 7a' des Dachkantprismas 7a aufgebracht werden. Des Weiteren besteht die Möglichkeit, die holographische Schicht 10 als Lasergravur in die Fläche 7a' des Dachkantprismas 7a einzubringen. Auch kann die holographische Schicht 10 als Kunststoff-Presshologramm oder in einer anderen, allgemein bekannten Technik zur Holographiefertigung erzeugt werden.

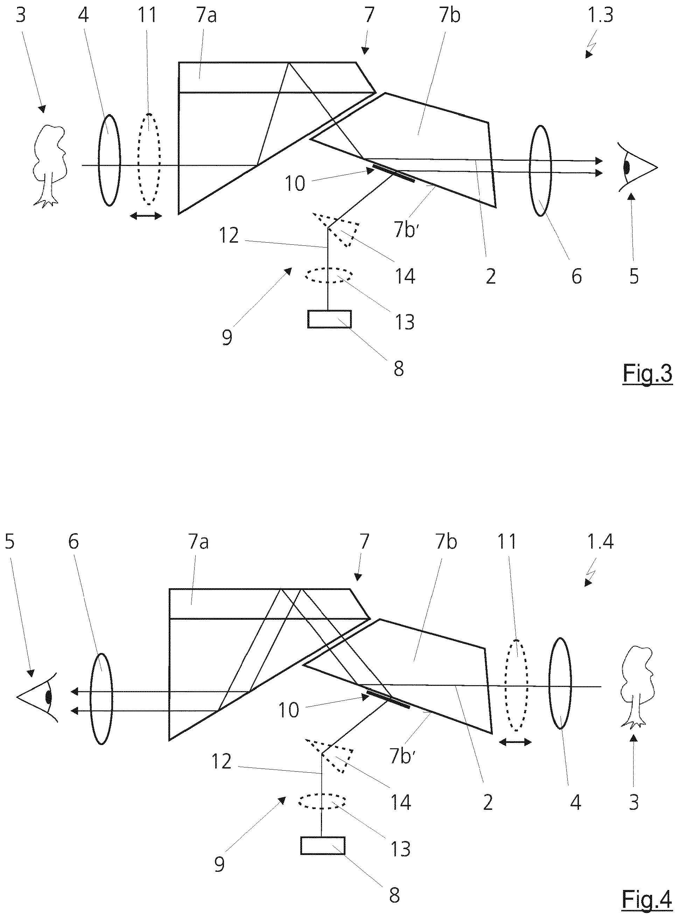

In Figur 3 ist ein drittes optisches Beobachtungsgerät 1.3 dargestellt. Die holographische Schicht 10 ist dabei auf eine Fläche 7b' des Gleichschenkelprismas 7b des Abbe-König-Prismensystems 7 aufgebracht.

Figur 4 zeigt ein viertes optisches Beobachtungsgerät 1.4.

Dabei ist im Gegensatz zu dem dritten Beispiel des optischen Beobachtungsgeräts 1.3 aus Figur 3 lediglich das Abbe-König-Prismensystem 7 umgedreht angeordnet, so dass das Dachkantprisma 7a dem Auge 5 des Beobachters zugewandt ist.

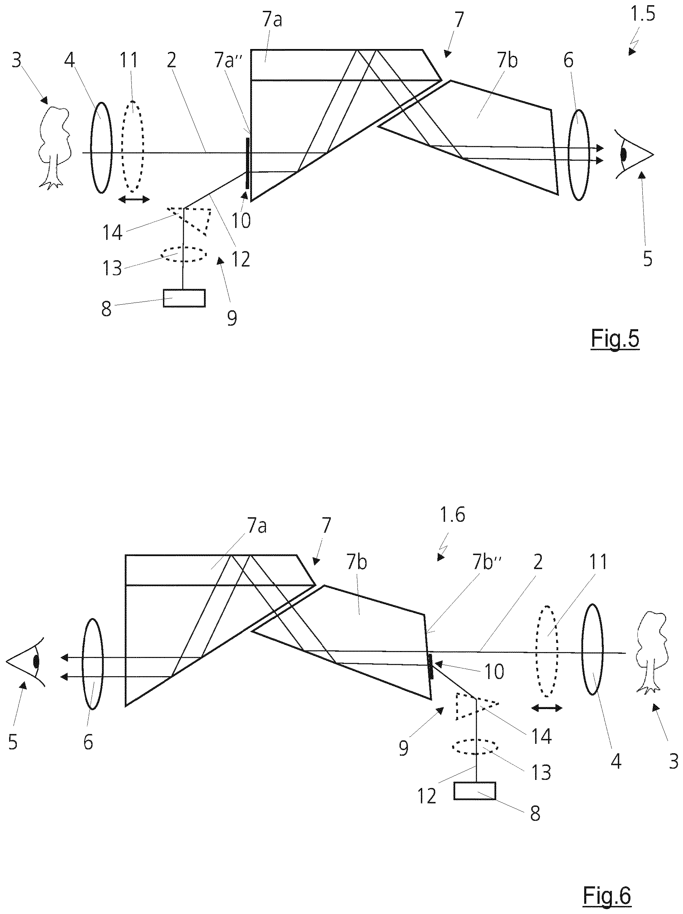

Figur 5 zeigt eine Ausführungsform eines erfindungsgemäßen Beobachtungsgeräts 1.5. Hierbei ist eine Lichteintrittsfläche 7a" des Dachkantprismas 7a für das Beobachtungslicht mit der holographischen Schicht 10 versehen.

Im Gegensatz dazu ist in Figur 6 eine zweite Ausführungsform eines erfindungsgemäßen optischen Beobachtungsgeräts 1.6 dargestellt, bei welchem eine Lichteintrittsfläche 7b" des Gleichschenkelprismas 7b für das Beobachtungslicht mit der holographischen Schicht 10 versehen ist.

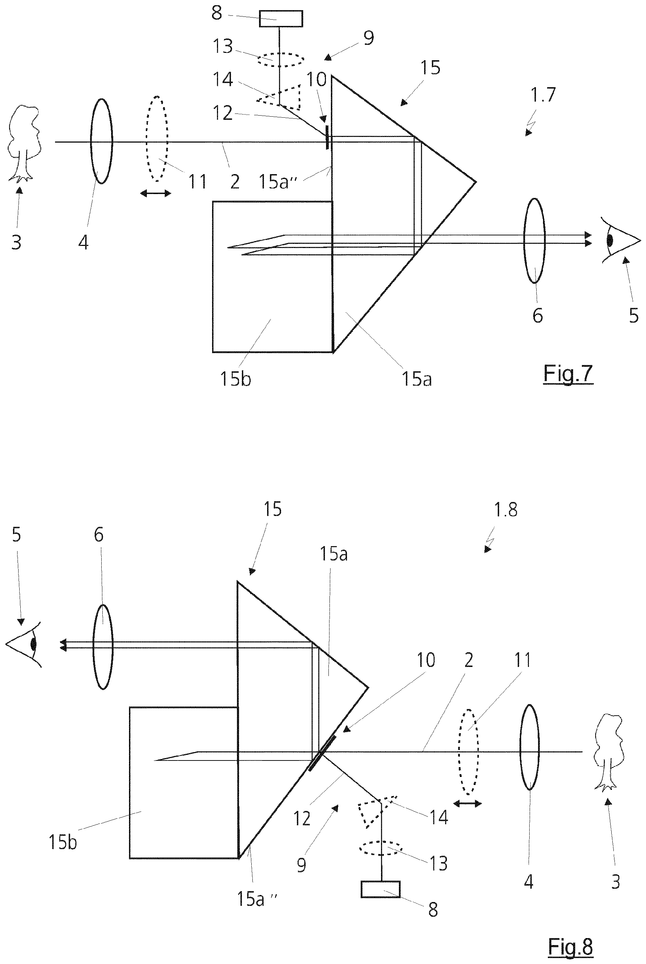

In Figur 7 ist eine dritte Ausführungsform eines erfindungsgemäßen optischen Beobachtungsgeräts 1.7 dargestellt. Dabei ist als Umkehrsystem ein Porroprismensystem 15 mit einem ersten Prisma 15a und einem zweiten Prisma 15b vorgesehen. Das Porroprismensystem 15 ist mit dem holographischen optischen Element 10 der Einrichtung 9 zur Bildüberlagerung versehen. Das holographische optische Element ist als holographische Schicht 10 auf eine Fläche, nämlich eine Lichteintrittsfläche 15a" des ersten Prismas 15a für das Beobachtungslicht aufgebracht.

Figur 8 zeigt eine vierte Ausführungsform eines erfindungsgemäßen optischen Beobachtungsgeräts 1.8, bei welchem das Porroprismensystem 15 im Gegensatz zu der Ausführungsform gemäß Figur 7 umgedreht angeordnet ist. Dabei ist wieder die Lichteintrittsfläche 15a" des ersten Prismas des Porroprismensystems 15 für das Beobachtungslicht mit der holographischen Schicht 10 versehen.

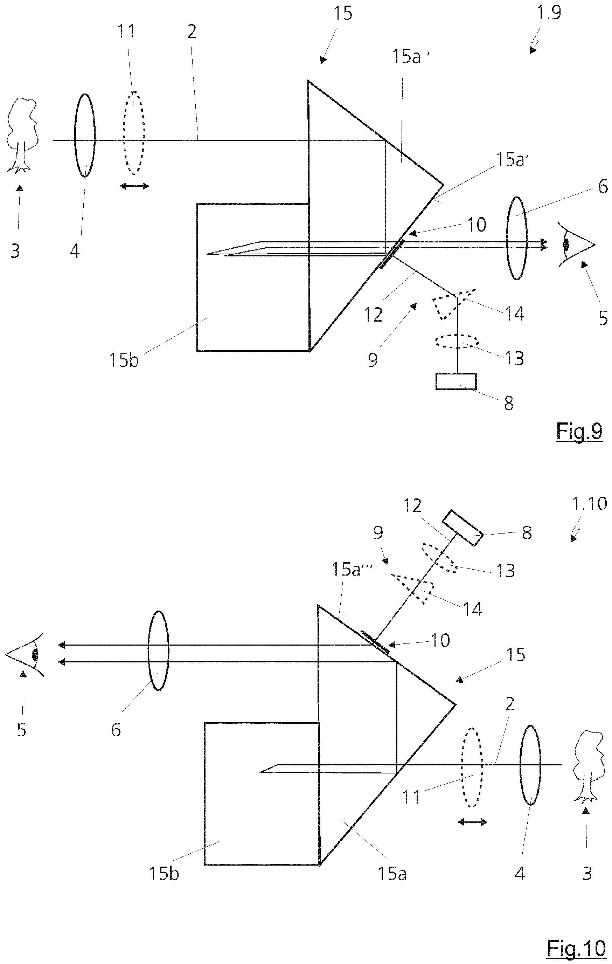

Figur 9 zeigt ein nicht zur Erfindung gehörendes optisches Beobachtungsgerät 1.9, bei welcher eine Lichtaustrittsfläche 15a' des ersten Prismas 15a für das Beobachtungslicht mit der holographischen Schicht 10 versehen ist.

Figur 10 zeigt ein nicht zur Erfindung gehörendes optisches Beobachtungsgerät 1.10 sowie Figur 11 ein nicht zur Erfindung gehörendes optisches Beobachtungsgerät 1.11. Dabei ist jeweils eine weitere Fläche 15a''' des ersten Prismas 15a mit der holographischen Schicht 10 versehen.

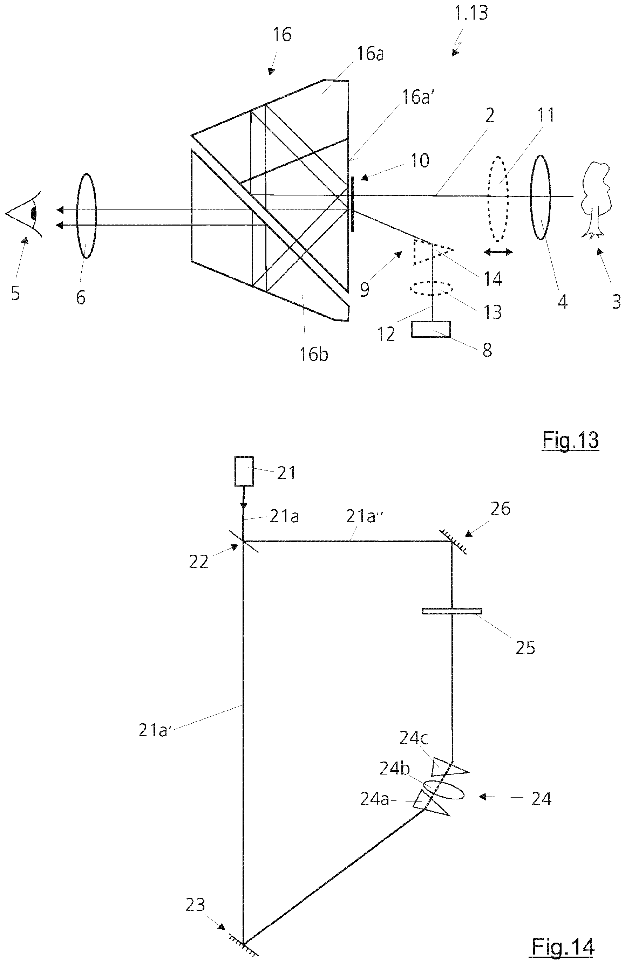

Figur 12 zeigt eine fünfte Ausführungsform eines erfindungsgemäßen optischen Beobachtungsgeräts 1.12 sowie Figur 13 eine sechste Ausführungsform eines erfindungsgemäßen optischen Beobachtungsgeräts 1.13. Dabei ist jeweils als Umkehrsystem ein Schmidt-Pechan-Prismensystem 16 mit einem Dachkantprisma 16a und einem weiteren Prisma 16b vorgesehen. In Figur 12 ist eine Lichteintrittsfläche (16b') des weiteren Prismas (16b) des Schmid-Pechan-Prismensystems (16) und in Figur 13 eine Lichteintrittsfläche (16a') des Dachkantprismas (16a) des Schmidt-Pechan-Prismensystems (16) für das Beobachtungslicht mit der holographischen Schicht (10) versehen.

Bei Bedarf können weitere optische Elemente, z. B. zur Vergrößerung oder Verkleinerung der Abbildung integriert werden. Die Umkehrsysteme 7, 15, 16 können auch in anderen Ausführungsbeispielen in den Strahlengang eines Fernrohres oder Fernglases anstelle des üblichen Umkehrsystems eingebaut werden, so dass deren Anzeige dann im Beobachtungsbild des Beobachtungsgeräts überlagert erscheint.

Die Strahlengänge 2 bzw. 12 sind in den Figuren 1 bis 13 stark vereinfacht dargestellt.

In Figur 14 ist ein Herstellungsverfahren für das holographische optische Element 10 vereinfacht dargestellt. Wie aus Figur 14 ersichtlich, wird ein Laser 21 mit derselben Wellenlänge wie das Licht der später verwendeten Anzeigeeinrichtung 8 eingesetzt. Das Licht 21a des Lasers wird mit Hilfe eines Strahlteilers 22 geteilt. Ein erster Teilstrahl 21a' des Laserlichts 21a wird anschließend durch einen Spiegel 23 umgelenkt und tritt durch eine Optik 24, welche die Grundlage für das holographische optische Element 10 bildet. Die Optik weist dabei ein Prisma 24a, eine optionale Kollimatorlinse bzw. Abbildungslinse 24b, welche die Anzeige in eine Bildebene abbildet und ein optionales weiteres Prisma 24c, das den Einbauwinkel der Anzeigeeinrichtung 8 berücksichtigen kann, auf. Danach wird der Teilstrahl 21a' auf eine fotoempfindliche Schicht 25 (z. B. Silbersalze auf Glas) gelenkt. Der zweite Teilstrahl 21a" des Laserlichts 21a wird ebenfalls an einem Spiegel 26 reflektiert und fällt dann von hinten auf die fotoempfindliche Schicht 25. Beide Teilstrahlen 21a', 21a" belichten die fotoempfindliche Schicht 25. Nach dem Auswaschen nicht belichteter Silbersalze ist das holographische optische Element 10 fertiggestellt.

### Bezugszeichenliste:

- 1.1-1.11: Optisches Beobachtungsgerät
- 2: Visueller Beobachtungsstrahlengang
- 3: Zielobjekt
- 4: Objektiv
- 5: Auge eines Beobachters
- 6: Okular
- 7: Abbe-König-Prismensystem
- 7a: Dachkantprisma
- 7a': Fläche des Dachkantprismas
- 7a": Lichteintrittsfläche des Dachkantprismas
- 7b: Gleichschenkelprisma
- 7b': Fläche des Gleichschenkelprismas
- 7b": Lichteintrittsfläche des Gleichschenkelprismas
- 8: Anzeigeeinrichtung
- 9: Einrichtung
- 10: holographisches optisches Element
- 11: Fokuseinheit
- 12: zu überlagerndes Licht
- 13, 24b: optionale Abbildungslinse/Kollimatorlinse
- 14, 24c: optionales weiteres Prisma
- 15: Porroprismensystem
- 15a: 1. Prisma des Porroprismensystems
- 15b: 2. Prisma des Porroprismensystems
- 15a': Lichtaustrittsfläche des 1. Prismas
- 15a": Lichteintrittsfläche des 1. Prismas
- 15a''': weitere Fläche des 1. Prismas
- 16: Schmidt-Pechan-Prismensystem
- 16a: Dachkantprisma des Schmidt-Pechan-Prismensystems
- 16b: Weiteres Prisma des Schmidt-Pechan-Prismensystems
- 16a': Lichteintrittsfläche des Dachkantprismas
- 16b': Lichteintrittsfläche des weiteren Prismas
- 21: Laser
- 21a: Laserlicht
- 21a': 1. Teilstrahl des Laserlichts
- 21a": 2. Teilstrahl des Laserlichts
- 22: Strahlteiler
- 23: Spiegel
- 24: Optik
- 24a: Prisma
- 25: fotoempfindliche Schicht
- 26: Spiegel

## Patentansprüche

1. Optisches Beobachtungsgerät (1) mit wenigstens einem visuellen Beobachtungsstrahlengang (2), welches wenigstens
- ein in einer Betriebsstellung einem zu beobachtenden Zielobjekt (3) zuzuwendendes, das Zielobjekt (3) abbildendes Objektiv (4),
- ein einem Auge (5) eines Beobachters zuzuwendendes Okular (6),
- ein in dem wenigstens einen visuellen Beobachtungsstrahlengang (2) zwischen dem Objektiv (4) und dem Okular (6) angeordnetes Abbe-König-Prismensystem (7), Porroprismensystem (15) oder Schmidt-Pechan-Prismensystem (16) zur Bildumkehr des wenigstens einen visuellen Beobachtungsstrahlengangs (2),
- eine Anzeigeeinrichtung (8), um dem Beobachter ein zusätzliches Bild in dem visuellen Beobachtungsstrahlengang (2) anzuzeigen, und
- eine Einrichtung (9) zur Bildüberlagerung, welche ein holographisches optisches Element (10) aufweist und welche das Bild der Anzeigeeinrichtung (8) mit dem Bild des zu beobachtenden Zielobjekts (3) in einer Zwischenbildebene (7a', 7b', 7a", 7b", 15a', 15a", 15a"', 16a', 16b') des visuellen Beobachtungsstrahlengangs (2) mittels des holographischen optischen Elements (10) überlagert, aufweist,
wobei das Abbe-König-Prismensystem (7), das Porroprismensystem (15) oder das Schmidt-Pechan-Prismensystem (16) mit dem wenigstens einen holographischen optischen Element (10) der wenigstens einen Einrichtung (9) zur Bildüberlagerung versehen ist, wobei das Abbe-König-Prismensystem (7), das Porroprismensystem (15) oder das Schmidt-Pechan-Prismensystem (16) eine Lichteintrittsfläche (7a", 7b", 15a", 16a', 16b') für Beobachtungslicht aufweist, wobei die Lichteintrittsfläche (7a", 7b", 15a", 16a', 16b') mit dem holographischen optischen Element (10) versehen ist und wobei das holographische optische Element (10) transmittierend sowohl für Licht von der Anzeigeeinrichtung (8) als auch für Licht von dem Zielobjekt (3) ist.

2. Optisches Beobachtungsgerät nach Anspruch 1, **dadurch gekennzeichnet, dass** das holographische optische Element (10) eine Umlenkung des zu überlagernden Lichts (12) des Bildes der Anzeigeeinrichtung (8) in den wenigstens einen visuellen Beobachtungsstrahlengang (2) bewirkt.

3. Optisches Beobachtungsgerät nach Anspruch 1 oder 2, **dadurch gekennzeichnet, dass** das holographische optische Element (10) zusätzlich eine Abbildung, eine Kollimation und/oder eine Wellenlängenselektion des zu überlagernden Lichts (12) der Anzeigeeinrichtung (8) bewirkt.

4. Optisches Beobachtungsgerät nach Anspruch 1, 2 oder 3, **dadurch gekennzeichnet, dass** das holographische optische Element (10) als Transmissionsbeugungsgitter ausgeführt ist.

5. Optisches Beobachtungsgerät nach einem der Ansprüche 1 bis 4, **dadurch gekennzeichnet, dass** das holographische optische Element als holographische Schicht (10) auf der Lichteintrittsfläche (7a", 7b", 15a", 16a', 16b') des Abbe-König-Prismensystems (7), des Porroprismensystems (15) oder des Schmidt-Pechan-Prismensystems (16) aufgebracht ist.

6. Optisches Beobachtungsgerät nach einem der Ansprüche 1 bis 5, **dadurch gekennzeichnet, dass** ein Dachkantprisma (7a) oder ein Gleichschenkelprisma (7b) des Abbe-König-Prismensystems (7) oder ein Dachkantprisma (16a) oder ein weiteres Prisma (16b) des Schmidt-Pechan-Prismensystems (16) die Lichteintrittsfläche (7a", 7b", 16a', 16b') aufweist, die mit der holographischen Schicht (10) versehen ist.

7. Optisches Beobachtungsgerät nach Anspruch 6, **dadurch gekennzeichnet, dass** die Lichteintrittsfläche (7a", 7b", 16a', 16b') eine Lichteintrittsfläche (7a", 7b", 16a', 16b') des Dachkantprismas (7a) oder des Gleichschenkelprismas (7b) des Abbe-König-Prismensystems (7) oder des Dachkantprismas (16a) oder des weiteren Prismas (16b) des Schmidt-Pechan-Prismensystems (16) für das Beobachtungslicht ist.

8. Optisches Beobachtungsgerät nach einem der Ansprüche 1 bis 5, **dadurch gekennzeichnet, dass** ein erstes Prisma (15a) des Porroprismensystems (15) die Lichteintrittsfläche (15a") aufweist und dass die Lichteintrittsfläche (15a") des ersten Prismas (15a) des Porroprismensystems (15) mit der holographischen Schicht (10) versehen ist.

9. Optisches Beobachtungsgerät nach Anspruch 8, **dadurch gekennzeichnet, dass** die Lichteintrittsfläche (15a") eine Lichteintrittsfläche (15a") des ersten Prismas (15a) des Porroprismensystems (15) für das Beobachtungslicht ist.

## Claims

1. Optical observation device (1) with at least one visual observation beam path (2), which has at least
- an objective lens (4) that is, in an operating position, intended to face a target object (3) to be observed and images the target object (3),
- an eyepiece (6) intended to face an eye (5) of an observer,
- an Abbe-Koenig prism system (7), Porro prism system (15) or Schmidt-Pechan prism system (16), arranged in the at least one visual observation beam path (2) between the objective lens (4) and the eyepiece (6), for image inversion of the at least one visual observation beam path (2),
- a display device (8) for displaying an additional image in the visual observation beam path (2) to the observer, and
- a device (9) for image superposition, which has a holographic optical element (10) and which uses the holographic optical element (10) to superpose onto the image of the display device (8) the image of the target object (3) to be observed in an intermediate image plane (7a', 7b', 7a", 7b", 15a', 15a", 15a''', 16a', 16b') of the visual observation beam path (2),
wherein the Abbe-Koenig prism system (7), the Porro prism system (15) or the Schmidt-Pechan prism system (16) is provided with the at least one holographic optical element (10) of the at least one device (9) for image superposition, wherein the Abbe-Koenig prism system (7), the Porro prism system (15) or the Schmidt-Pechan prism system (16) has a light entrance face (7a", 7b", 15a", 16a', 16b') for observation light, wherein the light entrance face (7a", 7b", 15a", 16a', 16b') is provided with the holographic optical element (10) and wherein the holographic optical element (10) is transmissive both for light from the display device (8) and for light from the target object (3).

2. Optical observation device according to Claim 1, **characterized in that** the holographic optical element (10) effects a deflection of the light (12), which is to be superposed, of the image of the display device (8) into the at least one visual observation beam path (8).

3. Optical observation device according to Claim 1 or 2, **characterized in that** the holographic optical element (10) additionally effects an imaging, a collimation and/or a wavelength selection of the light (12), which is to be superposed, of the display device (8).

4. Optical observation device according to Claim 1, 2 or 3, **characterized in that** the holographic optical element (10) is designed to be a transmission diffraction grating.

5. Optical observation device according to one of Claims 1 to 4, **characterized in that** the holographic optical element is applied as a holographic layer (10) to the light entrance face (7a", 7b", 15a", 16a', 16b') of the Abbe-Koenig prism system (7), of the Porro prism system (15) or of the Schmidt-Pechan prism system (16) .

6. Optical observation device according to one of Claims 1 to 5, **characterized in that** a roof prism (7a) or an isosceles prism (7b) of the Abbe-Koenig prism system (7) or a roof prism (16a) or a further prism (16b) of the Schmidt-Pechan prism system (16) has the light entrance face (7a", 7b", 16a', 16b') that is provided with the holographic layer (10).

7. Optical observation device according to Claim 6, **characterized in that** the light entrance face (7a", 7b", 16a', 16b') is a light entrance face (7a", 7b", 16a', 16b') of the roof prism (7a) or of the isosceles prism (7b) of the Abbe-Koenig prism system (7), or of the roof prism (16a) or of the further prism (16b) of the Schmidt-Pechan prism system (16) for the observation light.

8. Optical observation device according to one of Claims 1 to 5, **characterized in that** a first prism (15a) of the Porro prism system (15) has the light entrance face (15a") and **in that** the light entrance face (15a") of the first prism (15a) of the Porro prism system (15) is provided with the holographic layer (10).

9. Optical observation device according to Claim 8, **characterized in that** the light entrance face (15a") is a light entrance face (15a') of the first prism (15a) of the Porro prism system (15) for the observation light.

## Revendications

1. Dispositif d'observation optique (1) comprenant au moins un trajet de faisceau d'observation visuelle (2), ledit dispositif comprenant au moins
- un objectif (4) qui, dans une position de fonctionnement, doit être dirigé vers un objet cible (3) à observer et reproduit l'objet cible (3),
- un oculaire (6) qui doit être dirigé vers un œil (5) d'un observateur,
- un système de prismes Abbe-Kônig (7), un système de prismes Porro (15) ou un système de prismes Schmidt-Pechan (16) disposé dans l'au moins un trajet de faisceau d'observation visuelle (2) entre l'objectif (4) et l'oculaire (6) pour inverser l'image de l'au moins un trajet de faisceau d'observation visuelle (2),
- un dispositif de présentation (8) destiné à présenter à l'observateur une image supplémentaire dans le trajet du faisceau d'observation visuelle (2), et
- un dispositif (9) de superposition d'images qui comporte un élément optique holographique (10) et qui superpose l'image du dispositif de présentation (8) à l'image de l'objet cible à observer (3) dans un plan d'image intermédiaire (7a', 7b', 7a", 7b", 15a', 15a", 15a''', 16a', 16b') du trajet de faisceau d'observation visuelle (2) au moyen de l'élément optique holographique (10),
le système de prismes Abbe-König (7), le système de prismes Porro (15) ou le système de prismes Schmidt-Pechan (16) étant pourvu d'au moins un élément optique holographique (10) de l'au moins un dispositif (9) de superposition d'images,
le système de prismes Abbe-König (7), le système de prismes Porro (15) ou le système de prismes Schmidt-Pechan (16) comportant une surface d'entrée de lumière (7a", 7b", 15a", 16a', 16b') destinée à la lumière d'observation,
la surface d'entrée de lumière (7a", 7b", 15a", 16a', 16b') étant pourvue de l'élément optique holographique (10) et l'élément optique holographique (10) transmettant aussi bien la lumière du dispositif présente (8) que la lumière de l'objet cible (3).

2. Dispositif optique d'observation selon la revendication 1, **caractérisé en ce que** l'élément optique holographique (10) dévie la lumière à superposer (12) de l'image du dispositif de présentation (8) dans l'au moins un trajet de faisceau d'observation visuelle (2).

3. Dispositif optique d'observation selon la revendication 1 ou 2, **caractérisé en ce que** l'élément optique holographique (10) effectue en plus une reproduction, une collimation et/ou une sélection de longueur d'onde de la lumière à superposer (12) du dispositif de présentation (8).

4. Dispositif optique d'observation selon la revendication 1, 2 ou 3, **caractérisé en ce que** l'élément optique holographique (10) est réalisé sous la forme d'un réseau de diffraction en transmission.

5. Dispositif optique d'observation selon l'une des revendications 1 à 4, **caractérisé en ce que** l'élément optique holographique est appliqué sous forme de couche holographique (10) sur la surface d'entrée de lumière (7a", 7b", 15a", 16a', 16b') du système de prismes Abbe-Kônig (7), du système de prismes Porro (15) ou du système de prismes Schmidt-Pechan (16).

6. Dispositif optique d'observation selon l'une des revendications 1 à 5, **caractérisé en ce qu'**un prisme triangulaire (7a) ou un prisme isocèle (7b) du système de prismes Abbe-Kônig (7) ou un prisme triangulaire (16a) ou un autre prisme (16b) du système de prismes Schmidt-Pechan (16) comporte la surface d'entrée de lumière (7a", 7b", 16a', 16b') qui est pourvue de la couche holographique (10).

7. Dispositif optique d'observation selon la revendication 6, **caractérisé en ce que** la surface d'entrée de lumière (7a", 7b", 16a', 16b') comporte une surface d'entrée de lumière (7a", 7b", 16a', 16b') du prisme triangulaire (7a) ou du prisme isocèle (7b) du système de prismes Abbe-Kônig (7) ou du prisme triangulaire (16a) ou de l'autre prisme (16b) du système de prisme Schmidt-Pechan (16), destinée à la lumière d'observation.

8. Dispositif optique d'observation selon l'une des revendications 1 à 5, **caractérisé en ce qu'**un premier prisme (15a) du système de prismes Porro (15) comporte la surface d'entrée de lumière (15a") et **en ce que** la surface d'entrée de lumière (15a") du premier prisme (15a) du système de prismes Porro (15) est pourvue de la couche holographique (10).

9. Dispositif optique d'observation selon la revendication 8, **caractérisé en ce que** la surface d'entrée de lumière (15a") est une surface d'entrée de lumière (15a") du premier prisme (15a) du système de prismes Porro (15) destinée à la lumière d'observation.
